# EUROPÄISCHE PATENTSCHRIFT

(11) **EP 0 914 295 B1**
(45) Veröffentlichungstag und Bekanntmachung des Hinweises auf die Patenterteilung: **01.03.2000**
(21) Anmeldenummer: 97923780.7
(22) Anmeldetag: 30.04.1997
(51) Int. Cl.: C02F 9/00

(54) **VERFAHREN ZUM BEHANDELN VON WASCHWASSER AUS DER GASWÄSCHE EINER EISENERZREDUKTIONSANLAGE**
PROCESS FOR TREATING THE SCRUBBING WATER FROM THE GAS SCRUBBING PROCESS IN AN IRON ORE REDUCTION PLANT
PROCEDE POUR TRAITER L'EAU DE LAVAGE ISSUE DU LAVAGE DU GAZ DANS UNE INSTALLATION DE REDUCTION DE MINERAI DE FER

(30) Priorität: 10.05.1996 DE 19620310
(43) Veröffentlichungstag der Anmeldung: 12.05.1999
(73) Patentinhaber: Deutsche Voest-Alpine Industrieanlagenbau GmbH, 40219 Düsseldorf (DE)
(72) Erfinder: VULETIC, Bogdan, D-40451 Düsseldorf (DE)
(74) Vertreter: Pfenning, Meinig & Partner
(86) Internationale Anmeldenummer: DE9700895
(87) Internationale Veröffentlichungsnummer: WO9743221

(56) Entgegenhaltungen:
- DE-A- 4 032 288

## Beschreibung

Die Erfindung betrifft ein Verfahren nach dem Oberbegriff des Anspruchs 1.

Aus der DE 40 32 288 C2 ist ein Verfahren zum Behandeln von Waschwasser aus der Gaswäsche einer Eisenerzreduktionsanlage bekannt, bei welchem das Waschwasser in einem oder mehreren Gaswäschern mit dem Rohgas in direkten Kontakt gebracht, aus dem Gaswäscher abgezogen und nach einer Feststoffabscheidung dem Gaswäscher abgekühlt wieder zugeführt wird. Hierbei wird das in einem ersten Eindicker weitgehend von Feststoffen befreite Waschwasser über ein Warmwasserbecken in einen Kühlturm geleitet, in welchem das Wasser gekühlt und gleichzeitig eine Abscheidung von gelöstem Kohlendioxid, eine Anreicherung mit Sauerstoff, eine Umwandlung der Calzium- und Magnesiumhydrogenkarbonate in Karbonate und des Eisenbikarbonats sowie des Eisensulfats in Eisen(III)hydroxid durchgeführt werden. Anschließend wird dieses chemisch destabilisierte Waschwasser in einen zweiten in Reihe geschalteten Eindicker durch Zugabe von Flockungs- und Koagulationsmitteln von den neu gebildeten und restlichen Feststoffen befreit, chemisch stabilisiert und über ein Kaltwasserbecken zum Gaswäscher zurückgeführt.

Das Gas aus einer Eisenerzreduktionsanlage enthält große Mengen an frisch reduzierten, sehr reaktionsfähigen Eisenpartikeln. Im Kontakt mit dem kohlendioxidgesättigten Waschwasser entsteht Eisenbikarbonat. Die Eisenpartikel reagieren auch mit Sulphationen zu Eisensulfat. Auf diese Weise wird ein großer Teil der Eisenfeststoffpartikel in eine lösliche Form übergeführt. Durch das Austreiben von Kohlendioxid und eine Anreicherung des Waschwassers mit Sauerstoff im Kühlturm entsteht aus Eisenbikarbonat und Eisensulfat Eisen(III)hydroxid, das im Wasser unlöslich ist und in Form von Flocken ausfällt. Die ausgefallenen Eisen(III)hydroxidflocken reagieren weiterhin mit dem im Wasser vorhandenen Sauerstoff und bilden feste Eisenoxide. Bei einer Schmelzreduktionsanlage enthält das Gas noch eine große Menge von Calzium- und Magnesiumoxidpartikeln, die mit dem kohlendioxidhaltigen Waschwasser Bikarbonate bilden, welche nach der Belüftung im Kühlturm als Karbonate ausfallen.

Dieses aus dem chemischen Gleichgewicht geratene Wasser mit starken Ablagerungstendenzen wird aus dem Kühlturm dem zweiten Eindicker zugeführt. Durch eine erhöhte Verweilzeit werden im zweiten Eindicker die im Kühlturm eingeleiteten Feststoffausfallvorgänge beendet und das Wasser wird stabilisiert, bevor es erneut für die Gaswäsche verwendet wird. Auf diese Weise werden die Ablagerungsprobleme im kritischen und reinigungsproblematischen Wäscher- und Prozeßbereich, der unter einem erhöhten Druck brennbarer und giftiger Gase betrieben wird, erfolgreich gelöst. Im Kühlturmbereich, der zellenweise zwecks Reinigung und Wartung periodisch abgestellt wird, sind jedoch die Feststoffablagerungen sehr groß. Bereits nach relativ kurzer Zeit wachsen die Wasserverteilersysteme und die Packung des Kühlturms vollständig zu und die Ablagerungen werden so hart, daß die Packung mehrere Male im Jahr erneut werden muß. Es wurden daher anstelle von Standardkühltürmen, die für die Kühlung von Waschwasser aus vergleichbaren Gaswäschen eingesetzt werden, Spezialkühltürme entwickelt, um die Zeitabstände zwischen den Reinigungszyklen zu verlängern und den Wartungsaufwand zu reduzieren. Es handelt sich hierbei um sehr große Kühltürme mit nur wenigen Einbauten und mit hoch aufgestellten Kühlturmtassen, um ein Abfließen des Waschwassers zum zweiten Eindicker durch freies Gefälle zu ermöglichen, mit Spezialdüsen für die Verrieselung des Wassers unter einem höheren Druck und verschiedenen anderen Maßnahmen, um den Reinigungsaufwand zu reduzieren und die Reinigungszeiten zu verkürzen. Der Aufwand für die Reinigung und Wartung ist jedoch noch immer sehr groß; weiterhin sind der Energieverbrauch bedeutend höher als bei einem normalen Kühlturm und die spezifischen Investitionskosten für den Kühlturm ebenfalls sehr hoch. Auch ist der Platzbedarf für zwei große Eindicker, einen großen Kühlturm, eine Pumpstation und Rohrleitungen sehr hoch, so daß es in vielen Fällen sehr problematisch ist, die Anlage auf dem zur Verfügung stehenden Platz unterzubringen.

Ein weiteres Problem bei diesem bekannten Verfahren ist die Ausschleusung von relativ großen Mengen von Kohlenmonoxid in die Atmosphäre, da das Waschwasser in den Gaswäschern, die unter höherem Druck betrieben werden, in einen direkten Kontakt mit den Gasen, die überwiegend aus Kohlenmonoxid und Kohlendioxid bestehen, kommt. Besonders große Gasmengen werden mit dem wesentlich kälteren Rücklaufwasser aus der zweiten Waschstufe in die Atmosphäre ausgeschleust. Ein Teil von diesen Gasen entweicht im ersten Eindicker, der unter atmosphärischem Druck betrieben wird, und der Rest wird im Kühlturm ausgetrieben.

Es ist daher die Aufgabe der vorliegenden Erfindung, das bekannte Verfahren zum Behandeln von Waschwasser aus der Gaswäsche einer Eisenerzreduktionsanlage, wobei das Waschwasser in in zwei gasseitig hintereinandergeschalteten Waschstufen angeordneten Gaswäschern mit dem Gas in direkten Kontakt gebracht, aus den Gaswäschern abgezogen und nach einer Feststoffabscheidung den Gaswäschern aufbereitet und abgekühlt wieder zugeführt wird, so zu verbessern, daß Ablagerungen im gesamten Waschwasserkreislauf mit Ausnahme des hierfür vorgesehenen Eindickers weitestgehend vermieden werden und die Ausschleusung von giftigem Kohlenmonoxid in die Atmosphäre stark reduziert wird. Weiterhin sollen die Investitions- und Betriebskosten sowie der Raumbedarf verringert werden.

Diese Aufgabe wird erfindungsgemäß gelöst durch die im kennzeichnenden Teil des Anspruchs 1 angegebenen Merkmale. Vorteilhafte Weiterbildungen des erfindungsgemäßen Verfahrens ergeben sich aus den Unteransprüchen.

Bei dem erfindungsgemäßen Verfahren wird nur das Waschwasser aus der ersten Waschstufe der Gaswäsche durch einen Eindicker zur Absetzung von Feststoffen geleitet, und dann in einem indirekten Wärmetauscher gekühlt, und das mit Wasserdampfkondensat verdünnte, mit Kohlendioxid nach Entspannung übersättigte Rücklaufwasser wird von der zweiten Waschstufe ohne Abscheidung der Feststoffe und ohne Verbindung zur Atmosphäre ungekühlt diesem Vorlaufwasser zugegeben, damit im Wasser gelöste Salze in Lösungsform bleiben und nicht als Ablagerungen ausfällen.

Da die Gase aus einer Eisenerzreduktions-Schmelzanlage frisch reduzierte und sehr reduktionsfähige Eisenpartikel sowie frisch kalzinierte Calzium- und Magnesiumoxide enthalten, ist das Rücklaufwasser aus der ersten Stufe der Gaswäsche mit deren Bikarbonaten fast gesättigt und es ist anzustreben, diese Salze in Lösungsform zu behalten und den Gleichgewichtszustand des Vorlaufwassers so weit aus dem Ablagerungsbereich heraus zu verschieben, daß es im Wasserkreislauf nicht zu Ablagerungen kommt. Um dieses zu erreichen, wird gemäß der Erfindung die Ausgasung von Kohlendioxid minimiert, die Aufnahme von Sauerstoff vermieden, das Wasser nach einer Teilentgasung von Kohlendioxid im Eindicker durch kohlendioxidreiches Gas unter erhöhtem Druck mit Kohlendioxid wieder angereichert, und das Vorlaufwasser in einem indirekten Wärmetauscher ohne Kontakt zur Atomsphäre abgekühlt und durch Beimischung des mit Wasserdampfkondensat und Frischwasser stark verdünnten und mit Kohlendioxid übersättigten Rücklaufwassers aus der zweiten Waschstufe verdünnt und sein pH-Wert herabgesetzt.

Über eine Regelvorrichtung wird das Wasserniveau im Überlaufkanal vom Eindicker zum Warmwasserbehälter hoch eingestellt, wodurch eine minimale Anreicherung des Überlaufwassers mit Sauerstoff und ein minimales Entweichen von Kohlendioxid im Überlaufbereich des Eindickers erzielt werden, um gelöste Salze wie Calzium-, Magnesium- und Eisenbikarbonate in Lösungsform zu halten. Die Niveauregelvorrichtung ist über eine Leitung mit dem geschlossenen Warmwasserbehälter verbunden, in welchem das von Feststoffen weitgehend befreite Waschwasser mit einem kohlendioxidreichen Gas begast wird, um den leicht aus dem Gleichgewicht geratenen Kohlendioxidhaushalt des aus dem Eindicker zugeführten Waschwassers wieder ins Gleichgewicht zu bringen.

Das aus dem übersättigten Wasser aus der zweiten Waschstufe freigesetzte Gas wird nach einer Teilentspannung in einem Rücklaufwasserbehälter zur Begasung des in dem Warmwasserbehälter befindlichen Waschwassers in dieses eingeleitet. Je nach Bedarf kann diesem Gas eine erforderliche Menge des aus der zweiten Waschstufe herausgeführten kohlendioxidreichen gewaschenen Top- oder Exportgases zugegeben werden. Beide Behälter werden unter leichtem Überdruck, vorzugsweise der Warmwasserbehälter auf dem Druck der Exportgasleitung von ca. 0,15 bar und der Rücklaufwassersbehälter bei etwas höherem Druck gehalten, um eine Lösung von Kohlendioxid im im Warmwasserbehälter befindlichen Waschwasser schon vor dem Wärmetauscher zu erzielen, den Zugang für Sauerstoff zu versperren und nicht gelöstes Gas in die Exportgasleitung oder zu einer Fackelanlage abzuführen.

Vorzugsweise wird das Rücklaufwasser aus der zweiten Waschstufe, das relativ wenig und nur sehr feine Feststoffe enthält und nur einige Grad Celsius wärmer als das Vorlaufwasser ist, mit Kohlendioxid gesättigt und mit Wasserdampfkondensat verdünnt und nach Verlassen der Waschstufe in den geschlossenen Rücklaufwasserbehälter, der unter einem geringen Überdruck steht, eingeleitet und ohne Vorbehandlung dem Vorlaufwasser zugegeben. Durch diese Zuführung wird eine Verdünnung und eine weitere Anreicherung des aus dem Eindicker abgeführten Waschwassers mit Kohlendioxid erzielt. Ein kleinerer Teil des Wassers aus dem Rücklaufwasserbehälter wird in den unteren Teil des Warmwasserbehälters und ein größerer Teil hiervon hinter dem indirekten Wärmetauscher zugegeben. Da die Aufnahmefähigkeit von Wasser für Kohlendioxid bei niedrigeren Temperaturen und höherem Druck stark ansteigt, wird hierdurch erreicht, daß das gesamte mit dem Wasser aus dem Rücklaufwasserbehälter zugeführte Kohlendioxid im Vorlaufwasser in Lösungsform bleibt. Die Einleitung eines kleineren Teils dieses Wassers in den unteren Bereich des Warmwassersbehälters soll das Waschwasser vor dem indirekten Wärmetauscher weiter mit Kohlendioxid anreichern und verdünnen, um Ablagerungen im Wärmetauscher selbst zu vermeiden.

Gemäß einer weiteren vorteilhaften Ausbildung des erfindungsgemäßen Verfahrens wird ein Teil des im Warmwasserbehälter mit Kohlendioxid stabilisierten Waschwassers ungekühlt zur Quentschzone der ersten Waschstufe gepumpt, wodurch der Quentschvorgang der heißen Gase beschleunigt, das Temperaturniveau in der ersten Waschstufe angehoben und die Kondensation von großen Dampfmengen aus der ersten in die zweite Waschstufe verlagert wird. Das gebildete Kondensat dient in der zweiten Waschstufe als Verdünnungswasser, in welche mit den Gasen aus der ersten Waschstufe nur geringe Mengen an feinen, fast ausschließlich entgasten und im Wasser unlöslichen Kohlepartikeln gelangen, durch welche eine Anreicherung des Wassers mit gelösten Salzen kaum stattfindet. Das Kondensat ersetzt eine größere Menge an Zusatzwasser. Das Verfahren nutzt somit einen Teil der Abfallwärme des Prozesses für die Erzeugung von vollentsalztem Zusatzwasser aus, das Rücklaufwasser aus der ersten Waschstufe wird wärmer, die Gesamtwassermenge zum Eindicker wird kleiner und es wird sehr viel weniger giftiges Kohlenmonoxid aufgelöst und in die Atmosphäre ausgeschleust.

Zur Temperatursteuerung und wegen der doppelten Absicherung der Wasserversorgung der temperaturmäßig kritischen Quentschzone der ersten Waschstufe wird Rücklaufwasser von einem der ersten Waschstufe nachgeschalteten Kühlgaswäscher direkt in die Quentschzone der ersten Waschstufe eingeleitet. Auch kann Waschwasser aus dem Konus eines Gaswäschers der ersten Waschstufe direkt in dessen Quentschzone zurückgepumpt werden.

Eine Anhebung der Temperatur des aus der ersten Waschstufe austretenden Gases um einige Grad Celsius könnte fast ausreichen, um auf die Begasung mit kohlendioxidreichem Gas verzichten.

In der Quentschzone der ersten Waschstufe, wo die größte Dampfmenge durch Verdampfen von Waschwasser im Kontakt mit den heißen Gasen erzeugt und das Wasser sehr stark erwärmt wird, ist der Verschleiß stärker als die Ablabgerungen, so daß die abgelagerten Schichten abgetragen und als Feststoffe im Eindicker ausgeschieden werden. Da das Waschwasser in der ersten Waschstufe relativ stark erwärmt wird, kann die Wärme effektiv und umweltfreundlich in einem indirekten Wasser/Luft- oder Wasser/Wasser-Wärmetauscher abgeführt werden.

Das nicht vom Waschwasser gelöste, in den Warmwasserbehälter eingeführte kohlendioxidreiche Gas kann in die Exportgasleitung oder zu einer Fackelanlage geführt und damit umweltfreundlich entsorgt werden.

Vorteilhaft wird dem Rücklaufwasserbehälter zusätzlich Frischwasser zugeführt, um das umlaufende Waschwasser noch weiter aus dem Bereich der Kesselsteinbildung herauszuführen.

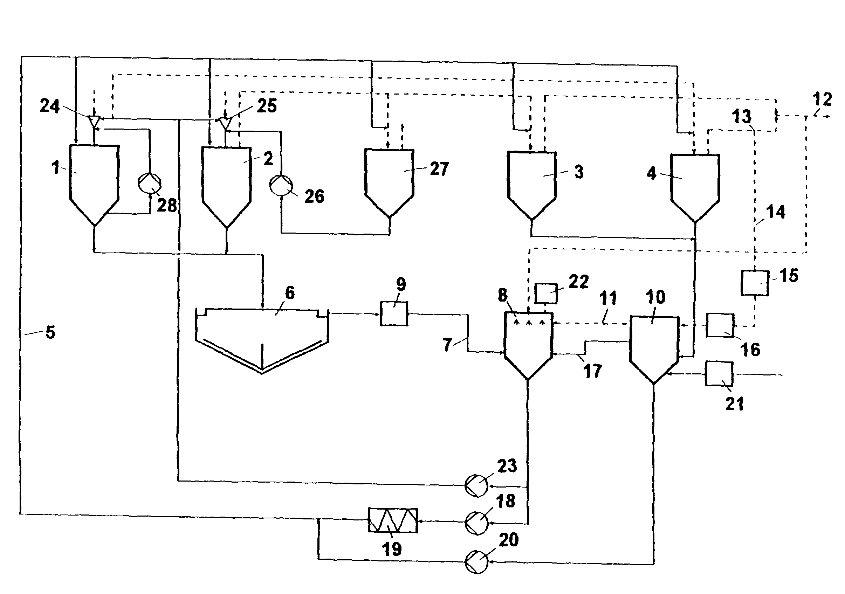

Die Erfindung wird im folgenden anhand eines in der Figur dargestellten Ausführungsbeispiels näher erläutert. Diese zeigt die Prinzipskizze einer nach dem erfindungsgemäßen Verfahren arbeitenden Gaswaschanlage.

Das dargestellte Ausführungsbeispiel bezieht sich auf die Reinigung der in einer aus einem Reduktionsschachtofen und einem Einschmelzvergaser bestehenden Eisenerzreduktionsanlage erzeugten Gase. Das vom Reduktionsschachtofen erzeugte Gas wird als Topgas und das vom Einschmelzvergaser erzeugte Gas als Vergasergas bezeichnet. Die Waschanlage weist zwei Stufen mit jeweils Gaswäschern auf, wobei in der ersten Waschstufe ein Gaswäscher 1 zum Waschen des Topgases und ein Gaswäscher 2 zum Waschen des Vergasergases sowie in der zweiten Waschstufe ein Gaswäscher 3 zum Waschen des Vergasergases und ein Gaswäscher 4 zum Waschen des Topgases vorgesehen sind. Die Gaswäscher 1 und 4 und die Gaswäscher 2 und 3 sind jeweils gasmäßig hintereinandergeschaltet. Das Waschwasser wird allen Gaswäschern 1 bis 4 direkt über eine Vorlaufwasserleitung 5 zugeführt. Die Gaswäscher 1 und 2 der ersten Stufe und die Gaswäscher 3 und 4 der zweiten Stufe sind in bezug auf die Führung des Waschwassers jeweils parallel zueinander geschaltet.

Das aus den Gaswäschern 1 und 2 der ersten Waschstufe herausgeführte, mit Verunreinigungen aus dem Topgas und dem Vergasergas belastete Waschwasser wird in einen Eindicker 6 geleitet, in welchem sich die Feststoffe absetzen. Das von den Feststoffen weitgehend befreite Waschwasser wird dann über einen Überlauf des Eindickers 6 und eine Zulaufleitung 7 in den unteren Teil eines Warmwasserbehälters 8 eingeleitet. Eine Regelvorrichtung 9 in der Zulaufleitung 7 regelt das Wasserniveau im Überlaufkanal des Eindickers 6 in der Weise, daß dieses hoch eingestellt ist. Hierdurch wird erreicht, daß nur eine minimale Anreicherung des Überlaufwassers mit Sauerstoff und ein minimales Entweichen von Kohlendioxid im Überlaufbereich des Eindickers 6 stattfinden.

Die Mündung der Zulaufleitung 7 in dem Warmwasserbehälter 8 befindet sich in dessen unterem Teil, damit sich im oberen Teil des unter einem leichten Überdruck stehenden Warmwasserbehälters 8 sammelnde Gase nicht durch die Zulaufleitung 7 in die Atmosphäre entweichen können. Daher sollte der Druck der Wassersäule über der Mündung der Zulaufleitung 7 mindestens das 1,5-fache des Gasdrucks im Warmwasserbehälter 8 betragen.

Das aus den Gaswäschern 3 und 4 der zweiten Waschstufe abgeführte Waschwasser gelangt in einen Rücklaufwasserbehälter 10. Dieses Waschwasser ist kohlendioxidreich und besteht zu einem erheblichen Teil aus kondensiertem Wasserdampf, so daß es weitgehend entsalzt ist. Der Rücklaufwasserbehälter 10 enthält keine eigene Entlüftung und in seinem oberen Teil sammeln sich überwiegend aus Kohlendioxid bestehende Entgasungsgase. Der Rücklaufwasserbehälter 10 steht unter einem etwas höheren Überdruck als der WarmwasSerbehälter 8, so daß das sich im oberen Teil des Rücklaufwasserbehälters 10 sammelnde Kohlendioxid über eine Überströmleitung 11 unterhalb der Wasseroberfläche in den Warmwasserbehälter 8 eingeleitet werden kann. Der Druck im Rücklaufwasserbehälter 10 wird bestimmt durch die Tiefe der Mündung der Überströmleitung 11 unterhalb der Wasseroberfläche im Warmwasserbehälter 8 und durch den Gasdruck im Warmwasserbehälter 8, der, da dieser in Verbindung mit der die gewaschenen Gase abführenden Exportgasleitung 12 steht, etwa 0,15 bar beträgt. Durch das dem Warmwasserbehälter 8 durch die Überströmleitung 11 zugeführte Kohlendioxid wird das Waschwasser im Warmwasserbehälter 8 mit Kohlendioxid angereichert. Falls jedoch die Menge des aus dem Rücklaufwasser der Gaswäscher 3 und 4 der zweiten Waschstufe austretenden Gases für die Anreicherung des Waschwassers in dem Warmwasserbehälter 8 mit Kohlendioxid nicht ausreicht, wird die erforderliche Menge aus dem gewaschenen kohlendioxidreichen Topgas aus der Leitung 13 und gegebenenfalls dem Exportgas aus der Leitung 12 über eine Leitung 14, in der sich eine Durchflußmeßvorrichtung 15 und eine von dieser gesteuerte Durchflußregelarmatur 16 befinden, abgezweigt und dem sich im oberen Teil des Rückwasserbehälters 10 sammelnden Gas beigemischt. Eine weitere Anreicherung des im Warmwasserbehälter 8 befindlichen Waschwassers mit Kohlendioxid erfolgt durch Beimischung des mit Kohlendioxid übersättigten Wassers aus dem Rücklaufwasserbehälter 10, das durch eine Überlaufleitung 17 in den unteren Teil des Warmwasserbehälters 8 eingeleitet wird. Durch den erhöhten Druck im unteren Teil des Warmwasserbehälters 8 tritt nur ein geringer Teil des Kohlendioxids aus dem so beigemischten Rücklaufwasser aus und steigt nach oben auf.

Das auf diese Weise mit Kohlendioxid angereicherte warme Waschwasser wird durch eine Vorlaufwasserpumpe 18 aus dem Warmwasserbehälter 8 über einen indirekten Wärmetauscher 19 und die Vorlaufwasserleitung 5 zu den Gaswäschern 1 bis 4 gepumpt. Dem im Wärmetauscher 19 abgekühlten Vorlaufwasser wird der Hauptteil des mit Wasserdampfkondensat verdünnten und mit Kohlendioxid übersättigten Wassers aus dem Rücklaufwasserbehälter 10 mittels einer Pumpe 20 zugegeben.

Eine Zugabe von Frischwasser erfolgt über eine Regelarmatur 21 zum Rücklaufwasserbehälter 10, wobei die Zugabe in Abhängigkeit von einer Niveaumessung 22 im Warmwasserbehälter 8 erfolgt. Eine an den Warmwasserbehälter 8 angeschlossene Pumpe 23 versorgt Quentschzonen 24 und 25 der Gaswäscher 1 und 2 der ersten Waschstufe direkt mit warmem Waschwasser aus dem Warmwasserbehälter 8. Eine Pumpe 26 fördert das Rücklaufwasser von einem Kühlgaswäscher 27, der gasseitig dem Gaswäscher 2 für das Vergasergas nachgeschaltet ist, zur temperaturkritischen Quentschzone 25 des Gaswäschers 2 der ersten Waschstufe und eine Pumpe 28 fördert das Waschwasser aus dem Konus des Gaswäschers 1 für das Topgas der ersten Waschstufe zu seiner Quentschzone 24 zurück.

Der indirekte Wärmetauscher 19 kann sowohl als Wasser/Wasser- als auch als Wasser/Luft-Wärmetauscher ausgeführt werden.

## Patentansprüche

1. Verfahren zum Behandeln von Waschwasser aus der Gaswäsche einer Eisenerzreduktionsanlage, wobei das Waschwasser in in zwei gasseitig hintereinandergeschalteten Waschstufen angeordneten Gaswäschern (1 bis 4) mit dem Gas in direkten Kontakt gebracht, aus den Gaswäschern (1 bis 4) abgezogen und nach einer Feststoffabscheidung den Gaswäschern (1 bis 4) aufbereitet und abgekühlt wieder zugeführt wird,
**dadurch gekennzeichnet,**
daß das Waschwasser aus den beiden Waschstufen separat abgeführt und nur das Waschwasser aus der ersten Waschstufe in einem Eindicker (6) weitgehend von Feststoffen befreit und anschließend in einen Warmwasserbehälter (8) geleitet wird, daß das Waschwasser aus der zweiten Waschstufe direkt in einen Rücklaufwasserbehälter (10) geleitet wird, in welchem es kohlendioxidreiches Entspannungsgas abgibt, das zur Kohlendioxidanreicherung des Waschwassers im Wasserbehälter (8) in diesen geführt wird, und daß das Waschwasser aus dem Warmwasserbehälter (8) in einem Wärmetauscher (19) gekühlt und anschließend zusammen mit dem Waschwasser aus dem Rücklaufwasserbehälter (10) zu den Gaswäschern (1 bis 4) der beiden Waschstufen zurückgeführt wird.

2. Verfahren nach Anspruch 1, dadurch gekennzeichnet, daß die Eisenerzreduktionsanlage aus einem Reduktionsschachtofen und einem Einschmelzvergaser besteht und daß für jede Waschstufe jeweils ein Gaswäscher für das Topgas (1,4) des Reduktionsschachtofens und das Vergasergas (2,3) des Einschmelzvergasers vorgesehen wird, wobei die Gaswäscher (1,2;3,4) jeder Waschstufe für den Durchlauf des Waschwassers zueinander parallelgeschaltet sind.

3. Verfahren nach Anspruch 1 oder 2, dadurch gekennzeichnet, daß die Zufuhr des Waschwassers aus dem Eindicker (6) in den Warmwasserbehälter (8) geregelt erfolgt, derart, daß das Wasserniveau im Überlaufkanal des Eindickers (6) hoch eingestellt wird.

4. Verfahren nach einem der Ansprüche 1 bis 3, dadurch gekennzeichnet, daß das im Warmwasserbehälter (8) befindliche Waschwasser durch Zuführung von aus der zweiten Waschstufe ausgetretenem gewaschenem Gas mit Kohlendioxid angereichert wird.

5. Verfahren nach einem der Ansprüche 1 bis 4, dadurch gekennzeichnet, daß ein Teil des im Rücklaufwasserbehälter (10) befindlichen Waschwassers in den Warmwasserbehälter (8) zur Kohlendioxidanreicherung des darin befindlichen Waschwassers geleitet wird.

6. Verfahren nach einem der Ansprüche 1 bis 5, dadurch gekennzeichnet, daß ein Teil des im Warmwasserbehälter (8) befindlichen Waschwassers ungekühlt zu den Quentschzonen (24,25) der Gaswäscher (1,2) der ersten Waschstufe geleitet wird.

7. Verfahren nach einem der Ansprüche 1 bis 6, dadurch gekennzeichnet, daß ein Teil des Waschwassers vom Konus des Gaswäschers (1) für das Topgas in der ersten Waschstufe zu der Quentschzone (24) dieses Gaswäschers (1) zurückgeführt wird.

8. Verfahren nach einem der Ansprüche 1 bis 7, dadurch gekennzeichnet, daß das Waschwasser eines der ersten Waschstufe nachgeschalteten Kühlgaswäschers (27) für das Vergasergas in die Quentschzone (25) des Gaswäschers (2) für das Vergasergas in der ersten Waschstufe eingeführt wird.

9. Verfahren nach einem der Ansprüche 1 bis 8, dadurch gekennzeichnet, daß das Waschwasser aus der zweiten Waschstufe durch den im aus der ersten Waschstufe austretenden Gas mitgeführten, in der zweiten Waschstufe kondensierten Wasserdampf ergänzt wird.

10. Verfahren nach einem der Ansprüche 1 bis 9, dadurch gekennzeichnet, daß das Waschwasser im Rücklaufwasserbehälter (10) durch Zuführung von Frischwasser ergänzt wird.

11. Verfahren nach einem der Ansprüche 1 bis 10, dadurch gekennzeichnet, daß aus dem Waschwasser im Warmwasserbehälter (8) austretendes Entspannungsgas dem aus der zweiten Waschstufe austretenden gewaschenen Gas oder einer Fackelanlage zugeführt wird.

12. Verfahren nach einem der Ansprüche 1 bis 11, dadurch gekennzeichnet, daß die Kühlung des Waschwassers aus dem Warmwasserbehälter (8) durch indirekten Wasser/Wasser- oder Wasser/Luft-Wärmetausch erfolgt.

## Claims

1. Process for treating the scrubbing water from the gas scrubbing process of an iron ore reduction plant, in which the scrubbing water is brought into direct contact with the gas inside scrubbing towers (1 - 4) which are arranged in two gas-side consecutive scrubbing stages; is drained off from the scrubbing towers (1 - 4); and is fed back into the towers in a purified and cooled condition after being filtered to remove solid particles;
in which the scrubbing water is drawn off separately from the two scrubbing stages, and the water from the first stage only has most of its solid particles removed in a concentrator (6) and is then fed into a hot water reservoir (8); the scrubbing water from the second stage is taken directly to a retaining tank (10), in which it releases carbon dioxide-rich expansion gas, which is fed into the water in the reservoir (8) in order to enrich this with carbon dioxide; the water from the hot water reservoir (8) is cooled in a heat exchanger (19) and is then - together with the water from the retaining tank (10) - fed back to the scrubbing towers (1 - 4).

2. Process as in Claim 1, in which the iron ore reduction plant consists of a reduction shaft furnace and a smelting vaporiser, and that for each scrubbing stage a scrubbing tower is provided in each case for the top gas (1, 4) from the reduction shaft furnace and for the manufactured gas (2, 3) from the smelting vaporiser; the towers (1,2; 3,4) of each scrubbing stage are connected in parallel to permit the flow of the scrubbing water.

3. Process as in Claim 1 or 2, in which the flow of the scrubbing water from the concentrator (6) into the hot water reservoir (8) is controlled by the high setting of the water level in the overflow channel of the concentrator (6).

4. Process as in any of Claims 1 to 3, in which the water in the hot water reservoir (8) is enriched with carbon dioxide by feeding into it the scrubbed gas from the second scrubbing stage.

5. Process as in any of Claims 1 to 4, in which part of the water in the retaining tank (10) is fed into the hot water reservoir (8) in order to enrich the water which it contains with carbon dioxide.

6. Process as in any of Claims 1 to 5, in which part of the water in the hot water reservoir (8) is taken to the quenching zones (24, 25) of the scrubbing towers (1, 2) of the first stage.

7. Process as in any of Claims 1 to 6, in which part of the water from the cone of the scrubbing tower (1) for the top gas in the first scrubbing stage is fed back into the quenching zone (24) of this tower (1).

8. Process as in any of Claims 1 to 7, in which the water from one of the cooling gas scrubbing towers (27) for the manufactured gas - positioned after the first scrub stage - is taken into the quenching zone (25) of the tower (2) for the manufactured gas in the first scrub stage.

9. Process as in any of Claims 1 to 8, in which the water vapour - carried in the gas emitted at the first scrubbing stage and condensed in the second scrubbing stage - is added to the water from the second scrubbing stage.

10. Process as in any of Claims 1 to 9, in which fresh water is added to the scrubbing water in the retaining tank (10).

11. Process as in any of Claims 1 to 10, in which the expansion gas from the scrubbing water in the hot water reservoir (8) is taken into the scrubbed gas from the second scrubbing stage or is led to a discharge device.

12. Process as in any of Claims 1 to 11, in which the scrubbing water from the hot water reservoir (8) is cooled by indirect water/water or water/air heat exchange.

## Revendications

1. Procédé pour traiter l'eau de lavage issue du lavage du gaz dans une installation de réduction du minerai de fer, dans lequel l'eau de lavage est amenée en contact direct avec le gaz dans des épurateurs de gaz (1 à 4) disposés dans deux étages de lavage en série côté gaz, soutirée des épurateurs de gaz (1 à 4) et, après une séparation des matières solides, redirigée dans les épurateurs de gaz (1 à 4) épurée et refroidie,
caractérisé en ce que l'eau de lavage issue des deux étages de lavage est transportée séparément et en ce que seule l'eau de lavage issue du premier étage de lavage est largement libérée des matières solides dans un épaississeur (6) puis amenée dans un bassin d'eau chaude (8), en ce que l'eau de lavage issue du second étage de lavage est directement dirigée dans un bassin d'eau de retour (10), dans lequel elle dégage un gaz de détente riche en dioxyde de carbone, lequel, pour enrichir en dioxyde de carbone l'eau de lavage dans le bassin d'eau chaude (8), est amené dans celui-ci, et en ce que l'eau de lavage issue du bassin d'eau chaude (8) est refroidie dans un échangeur de chaleur (19) puis redirigée avec l'eau de lavage issue du bassin d'eau de retour (10) vers les épurateurs de gaz (1 à 4) des deux étages de lavage.

2. Procédé selon la revendication 1, caractérisé en ce que l'installation de réduction de minerai de fer se compose d'un four vertical de réduction et d'un gazéificateur de fusion et en ce que, pour chaque étage de lavage, sont respectivement prévus un épurateur de gaz pour le gaz de gueulard (1,4) du four vertical de réduction et pour le gaz du gazéificateur (2,3) du gazéificateur de fusion, les épurateurs (1,2 ; 3,4) de chaque étage de lavage étant disposés en parallèle pour l'écoulement de l'eau de lavage.

3. Procédé selon la revendication 1 ou 2, caractérisé en ce que l'amenée de l'eau de lavage depuis l'épaississeur (6) dans le bassin d'eau chaude (8) s'effectue de façon régulée de façon telle que le niveau d'eau dans le conduit de trop-plein de l'épaississeur (6) est réglé pour être élevé.

4. Procédé selon l'une des revendications 1 à 3, caractérisé en ce que l'eau de lavage se trouvant dans le bassin d'eau chaude (8) est enrichie en dioxyde de carbone par apport de gaz épuré issu du second étage de lavage.

5. Procédé selon l'une des revendications 1 à 4, caractérisé en ce qu'une portion de l'eau de lavage se trouvant dans le bassin d'eau de retour (10) est dirigée dans le bassin d'eau chaude (8) pour enrichir en dioxyde de carbone l'eau de lavage s'y trouvant.

6. Procédé selon l'une des revendications 1 à 5, caractérisé en ce qu'une portion de l'eau de lavage se trouvant dans le bassin d'eau chaude (8) est dirigée non refroidie vers les zones d'extinction (24, 25) des épurateurs de gaz (1,2) du premier étage de lavage.

7. Procédé selon l'une des revendications 1 à 6, caractérisé en ce qu'une portion de l'eau de lavage du cône de l'épurateur d'eau (1) pour le gaz de gueulard dans le premier étage de lavage est redirigée vers la zone d'extinction (24) de cet épurateur d'eau (1).

8. Procédé selon l'une des revendications 1 à 7, caractérisé en ce que l'eau de lavage d'un épurateur de gaz de refroidissement (27) situé en aval du premier étage de lavage pour le gaz du gazéificateur est introduite dans la zone d'extinction (25) de l'épurateur de gaz (2) pour le gaz du gazéificateur du premier étage de lavage.

9. Procédé selon l'une des revendications 1 à 8, caractérisé en ce que l'eau de lavage issue du second étage de lavage est complétée par de la vapeur d'eau condensée dans le second étage de lavage et amenée avec le gaz issu du premier étage de lavage.

10. Procédé selon l'une des revendications 1 à 9, caractérisé en ce que l'eau de lavage est complétée dans le bassin d'eau de retour (10) par apport d'eau fraîche.

11. Procédé selon l'une des revendications 1 à 10, caractérisé en ce que le gaz de détente issu de l'eau de lavage dans le bassin d'eau chaude (8) est dirigé vers le gaz épuré issu du second étage de lavage ou vers une installation à torche.

12. Procédé selon l'une des revendications 1 à 11, caractérisé en ce que le refroidissement de l'eau de lavage issue du bassin d'eau chaude (8) se fait par le biais d'un échangeur de chaleur indirect eau/eau ou eau/air.
